# EUROPÄISCHE PATENTSCHRIFT

(11) **EP 2 071 215 B1**
(45) Veröffentlichungstag und Bekanntmachung des Hinweises auf die Patenterteilung: **17.08.2011**
(21) Anmeldenummer: 07024289.6
(22) Anmeldetag: 14.12.2007
(51) Int. Cl.: F16J 9/08, F16J 15/46, F16J 15/56, F16K 41/02

(54) **Dichtungsanordnung für Ventil**
Seal installation for valve
Dispositif de joint pour soupape

(43) Veröffentlichungstag der Anmeldung: 17.06.2009
(73) Patentinhaber: SIEMENS AKTIENGESELLSCHAFT, 80333 München (DE)
(72) Erfinder: Heidt, Rudolf, 47239 Duisburg (DE)

(56) Entgegenhaltungen:
- DE-A1- 1 650 050
- US-A- 3 735 991
- US-A1- 2002 017 327
- US-A1- 2003 197 144

## Beschreibung

Die Erfindung betrifft eine Dichtungsanordnung zum Abdichten eines Spaltes zwischen einer Spindel und einem um die Spindel angeordneten Gehäuses.

Solch eine Dichtungsanordnung wird beispielsweise in Dampfturbinenventilen eingebaut. In der Regel werden zur Regelung der Dampfzufuhr bei einer Dampfturbine sowohl ein Schnellschlussventil als auch ein Stellventil verwendet. Das schnell wirkende Schnellschlussventil ist zwischen der Dampfturbine und der Frischdampfleitung bzw. des Dampferzeugers angeordnet und wirkt zum Schutz der Dampfturbine. Bei Gefahr wird die Dampfzufuhr schlagartig unterbrochen, ausgelöst von Wächtern oder durch einen Handeingriff. Daher sind diese Schnellschlussventile für kurze Schließzeiten bei großer Zuverlässigkeit konstruiert. Stellventile dagegen steuern den Dampfstrom zur Dampfturbine in Abhängigkeit von einer jeweiligen Belastung. In einigen Ausführungsformen wird das Schnellschluss- und das Stellventil in einem gemeinsamen Gehäuse eingebaut.

Sowohl ein Schnellschluss- als auch ein Stellventil umfasst unter anderem eine Spindel, das mit einem Vorhubkegel zumeist einstückig gefertigt ist. Der Vorhubkegel liegt an einem Sitzkegel, wodurch der Dampf durch diesen Sitzkegel geregelt wird. Diese Öffnung wird durch die Bewegung der Spindel erreicht. Da im Inneren des Ventils der Dampf hohe Drücke und hohe Temperaturen aufweisen kann, ist zwingend eine gute Dichtung zwischen der Spindel und dem Ventilgehäuse, in dem die Spindel beweglich angeordnet ist, erforderlich. Konstruktionsbedingt entsteht ein Spalt zwischen der Spindel und dem Gehäuse. Im Ventilinneren weist der Dampf hohe Drücke und hohe Temperaturen auf. Ein Austreten dieses Dampfes durch den Spalt zwischen der Spindel und dem Ventilgehäuse muss vermieden werden. Dies wird derzeit dadurch erreicht, dass das Spiel zwischen dem Ventilgehäuse und der Ventilspindel minimiert wird. Dennoch genügt diese Maßnahme nicht aus, um die Dampfverluste zu minimieren.

Die US 3 735 991 offenbart Dichtungsanordnung mit verschiedenen Ringkammern.

Wünschenswert wäre es eine verbesserte Dichtungsanordnung zu haben, mit einer verbesserten Dichtmöglichkeit zwischen dem Ventilgehäuse und der Spindel.

An dieser Stelle setzt die Erfindung an, deren Aufgabe es ist, eine Dichtungsanordnung anzugeben, die zu einer verbesserten Dichtheit zwischen dem Ventilgehäuse und der Spindel führt.

Diese Aufgabe wird gelöst durch eine Dichtungsanordnung gemäß Anspruch 1.

Mit der Erfindung wird daher vorgeschlagen, den Spalt zwischen dem Ventilgehäuse und der Ventilspindel weiter abzudichten mittels einer zweiteiligen Buchse, die am Ventilgehäuse angeordnet ist und mit einem erste Kolbenring zwischen der Spindel und der zweiteiligen Buchse ausgebildet ist. Da Kolbenringe mit einem minimalen Spalt um eine zylindrisch geformte Welle, wie hier die Ventilspindel, angeordnet werden können, ist die Dichtwirkung dieser Kombination aus der zweiteiligen Buchse und dem ersten Kolbenring sehr groß.

In den Unteransprüchen werden vorteilhafte Weiterbildungen angegeben.

So wird in einer ersten vorteilhaften Weiterbildung die Spindel entlang einer axialen Richtung ausgebildet. Des Weiteren ist ein Gewindering zum Ausüben einer Gewindekraft in axialer Richtung auf die zweiteilige Buchse vorgesehen, wodurch die zweiteilige Buchse mittels des Gewinderinges kraftschlüssig mit dem Gehäuse verbunden ist.

Dadurch ist eine leichte Montage der Dichtungsanordnung möglich. Darüber hinaus kann über den Gewindering und dem im ventilgehäuse vorgesehenen Gewindes eine große Kraft in Richtung der zweiteiligen Buchse ausgeübt werden.

Durch die Verwendung eines zweiten Kolbenringes wird die Dichtwirkung der Dichtungsanordnung weiterhin verbessert. Es ist auch möglich noch weitere Kolbenringe vorzusehen, um die Dichtwirkung zu verbessern.

Die zweiteilige Buchse weist eine Nut auf, in der der erste Kolbenring angeordnet ist.

Vorteilhafter Weise ist zwischen dem ersten Kolbenring und dem zweiten Kolbenring ein Zwischenring angeordnet. Dadurch wird ein Abstand zwischen dem ersten und zweiten Kolbenring erreicht, der dazu führt, dass die vom Gewindering ausgeübte Kraft von dem zweiten Kolbenring über den Zwischenring auf den ersten Kolbenring übertragen werden kann. Dadurch werden beide Kolbenringe in einer definierten Position gehalten. Die Kolbenringe weisen ein geringes Spiel in axialer Richtung auf. Darüber hinaus verbessert die vorteilhafte Ausführung mit einem Zwischenring die Dichtwirkung dieser Dichtungsanordnung.

Der Gewindering wird derart ausgebildet, dass dieser mittels der Gewindekraft die zweiteilige Buchse gegen das ventilgehäuse andrückt. Dadurch ist unter anderem die Möglichkeit gegeben die Dichtungsanordnung leicht zu montieren und zu demontieren. Darüber hinaus ist die ausübbare Kraft von dem Gewindering auf die zweiteilige Buchse an das Ventilgehäuse vergleichsweise hoch, wodurch ein sicheres Anliegen der Buchse am Ventilgehäuse gewährleistet ist. Vorteilhafter Weise weist die zweiteilige Buchse dafür eine Anlagefläche zum Anlegen an das Ventilgehäuse in axialer Richtung auf.

In der zweiteiligen Buchse eine Ausgleichsbohrung vorgesehen. Die Dichtungsanordnung ist hierbei zur Abdichtung eines unter dem Ventildruck pᵥₑₙₜᵢₗ stehenden Ventilraumes und eines unter dem Ausdruck p_{außen} stehenden Außenraums ausgebildet. Die Ausgleichsbohrung ist hierbei derart ausgebildet, dass ein zwischen der zweiteiligen Buchse und der Spindel gebildeter Spaltraum mit dem Ventilraum strömungstechnisch miteinander verbunden ist. Im Inneren des Ventils herrscht der Druck pᵥₑₙₜᵢₗ. Außen herrscht der Druck p_{Außen}. Der Druck p_{Außen} herrscht im statischen Zustand, d.h. wenn die Spindel nicht bewegt wird, auch in dem Spalt zwischen der zweiteiligen Buchse die zum Außenraum angrenzt und der Spindel. Sobald die Spindel bewegt wird ändert sich der Druck im Spalt, wobei der Druck in der Regel geringer wird. Das bedeutet allerdings, dass der Druckunterschied zwischen dem Ventilraum und dem Spalt zwischen der Buchse und der Spindel vergleichsweise groß ist und dadurch die Kraft, die auf die Spindel ausgeübt werden muss, um sie zu bewegen, vergrößert ist. Durch eine Ausgleichsbohrung in der Buchse herrscht im Spalt zwischen der Spindel und der Buchse der gleiche Druck wie im Ventilraum. Das bedeutet, dass der Druckunterschied zwischen dem Ventilraum und dem Spalt gleich bleibt, was dazu führt, dass die Kraft, die auf die Spindel ausgeübt werden muss geringer ist, was zu einem Vorteil führt.

In einer vorteilhaften Weiterbildung weist die zweiteilige Buchse eine erste und eine in axialer Richtung dahinter angeordnete zweite Buchse auf. Die zweite Buchse grenzt an den Ventilraum an, wobei die Ausgleichsbohrung in der zweiten Buchse angeordnet ist.

In einer vorteilhafte Weiterbildung weist der erste und/oder der zweite Kolbenring ein erstes Ende und ein dem ersten Ende gegenüberliegendes zweites Ende auf. Das bedeutet, dass der erste und/oder der zweite Kolbenring sozusagen aufgeschnitten sind an einer Stelle, wodurch der Innendurchmesser des Kolbenringes verändert werden kann.

Vorteilhafter Weise weist das erste Ende einen ersten Vorsprung mit einer ersten Anlagefläche und das zweite Ende einen zweiten Vorsprung mit einer zweiten Anlagefläche auf, wobei die erste Anlagefläche an der zweiten Anlagefläche anliegt. Dadurch wird die Dichtheit des Kolbenrings erhöht.

Vorteilhafter Weise ist die erste Anlagefläche und die zweite Anlagefläche in der axialen Richtung hintereinander angeordnet. Der Gewindering übt eine Kraft auf die zweite Buchse auf, wodurch eine Kraft auf die Kolbenringe herrscht. Diese Kraft bewirkt, dass die erste Anlagefläche und die zweite Anlagefläche gegeneinander gedrückt werden. Dadurch führt der Kolbenring in axialer Richtung gesehen zu einer guten Abdichtung. Durch den im Ventilraum herrschenden Dampfdruck wird ebenfalls eine bessere Abdichtung erreicht.

Vorteilhafter Weise weist der erste Kolbenring und/oder der zweite Kolbenring im ausgebautem Zustand einen Innenringdurchmesser rᵢₙₙₑₙ auf, der geringer ist als ein Außendurchmesser an einer Stelle der Spindel, an der der entsprechende erste Kolbenring oder der zweite Kolbenring angeordnet ist. Durch die Auftrennung des ersten Kolbenringes und/oder des zweiten Kolbenringes ist der Innenringdurchmesser rᵢₙₙₑₙ variabel. Dadurch, dass der Innenringdurchmesser rᵢₙₙₑₙ im ausgebauten Zustand ein wenig geringer ist als der Außendurchmesser der Spindel wird der Spalt zwischen dem Kolbenring und der Spindel minimiert, wodurch die Dichtwirkung erhöht wird.

Die Erfindung wird anhand von Ausführungsbeispielen näher erläutert, die in den Zeichnungen dargestellt sind. Es zeigen, teilweise schematisch und nicht maßstäblich.
- Figur 1: ein Teil einer Querschnittsansicht einer Dich- tungsanordnung;
- Figur 2: eine Draufsicht auf einen ersten bzw. zweiten Kolbenring.

Gleiche Bezugszeichen geben in den verschiednen Figuren die gleiche Bedeutung.

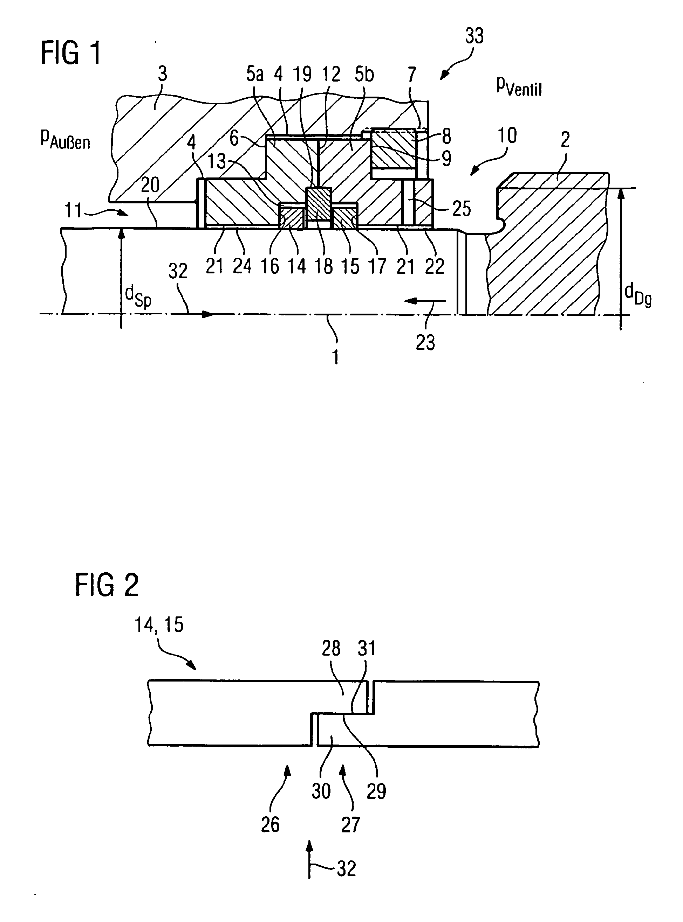

In der Figur 1 ist eine um eine Rotationsachse 1 rotationssymmetrisch ausgebildete Spindel 2 dargestellt. Ebenfalls rotationssymmetrisch um die Rotationsachse 1 angeordnet ist ein Ventilgehäuse 3. Das Ventilgehäuse 3 weist zumindest zwei Ausnehmungen 4 auf. In diesen Ausnehmungen 4 ist eine zweiteilige Buchse 5a, 5b angeordnet. Diese zweiteilige Buchse 5a, 5b kann aus dem Material Stellit 6 ausgebildet sein. Die zweiteilige Buchse 5a, 5b liegt in den Ausnehmungen 4 des Ventilgehäuses 3 möglichst passgenau an. Insbesondere liegt die zweiteilige Buchse 5a, 5b an einer Passfläche 6 an. Diese Passfläche 6 ist im Wesentlichen senkrecht zur Rotationsachse 1 ausgebildet.

Das Ventilgehäuse 3 weist ein Gewinde 7 zur Aufnahme eines um die Rotationsachse 1 rotationssymmetrisch ausgebildeten Gewinderinges 8 auf. Der Gewindering 8 liegt an einer Kontaktfläche 9 an der zweiteiligen Buchse 5a, 5b an. Durch Drehen des Gewinderinges 8 erfolgt eine Bewegung des Gewinderinges 8 in Richtung der zweiteiligen Buchse 5a, 5b, was zu einer Kraft auf die zweiteilige Buchse 5a, 5b führt und schließlich zu einem kraftschlüssigen Kontakt zu dem Ventilgehäuse 3.

Die zweiteilige Buchse umfasst eine erste Buchse 5a und eine in axialer Richtung dahinter angeordnete zweite Buchse 5b auf. Die zweite Buchse 5b grenzt an einen Ventilraum 10 an. Die erste Buchse 5a grenzt an einen Außenraum 11 an. Die erste Buchse 5a und die zweite Buchse 5b liegen an einer Berührungsfläche 12 aneinander. Die erste Buchse 5a und die zweite Buchse 5b kann zu dieser Berührungsfläche 12 symmetrisch ausgebildet sein. Im Wesentlichen ähnelt die Form der zweiten Buchse 5b im Querschnitt gesehen einem L, wohingegen die Form der ersten Buchse 5a im Querschnitt gesehen einem zur Berührungsfläche 12 gespiegelten L ähnelt.

Die zweiteilige Buchse 5a, 5b weist eine Nut 13 zur Aufnahme eines ersten Kolbenringes 14 und eines zweiten Kolbenringes 15 auf. Der erste Kolbenring 14 liegt an einer ersten Buchsenkontaktfläche 16 an dem Zwischenring 18 an, wohingegen der zweite Kolbenring 15 über eine zweite Buchsenkontaktfläche 17 an der zweiten Buchse 5b anliegt.

Zwischen dem ersten Kolbenring 14 und dem zweiten Kolbenring 15 ist ein Zwischenring 18 angeordnet. Der Zwischenring 18 ist in einer weiteren Nut 19 in der ersten Buchse 5a und zweiten Buchse 5b angeordnet.

Zwischen einer Oberfläche 20 der Spindel 2 und einer Innenoberfläche 21 ist ein Spaltraum 22 ausgebildet. Im Außenraum 11 herrscht im Betrieb ein Außendruck p_{Außen}. Im Ventilraum 10 herrscht ein Ventildruck p_{Ventil}. In der Regel ist der Ventildruck P_{Ventil} größer als der Außendruck P_{Außen}.

Durch den im Ventilraum 10 herrschenden Dampfdruck werden die Kolbenringe 14, 15 von außen auf die Spindel und axial in Richtung 23 gegen den Zwischenring 18 bzw. die erste Buchse 5a gedrückt, wodurch eine verbesserte Dichtwirkung erzielt wird.

Bei einer Bewegung der Spindel 2 in einer Bewegungsrichtung 23 verringert sich der Druck in dem Spaltraum 22. Im statischen Zustand, d. h., wenn die Spindel 2 steht, ist der Druck im Spaltraum 22 genauso groß wie der Druck im Ventilraum 10, nämlich der Ventildruck P_{Ventil}. Im Spaltraum 24 zwischen der Außenoberfläche 20 und der Innenoberfläche 21 der ersten Buchse 5a herrscht der Außendruck P_{Außen}. Eine Ausgleichsbohrung 25 in der zweiten Buchse 5b verhindert, dass der Druck in dem Spaltraum 22 bei einer Bewegung der Ventilspindel 2 geringer wird. Dies wird erreicht, weil ein zwischen der zweiten Buchse 5b und der Spindel 2 ausgebildeter Spaltraum 22 und der Ventilraum 10 strömungstechnisch miteinander verbunden sind.

Die Ausgleichsbohrung 25 ist im Wesentlichen senkrecht zur Rotationsrichtung 1 ausgebildet.

Die Figur 2 zeigt eine Darstellung des ersten Kolbenringes 14 oder des zweiten Kolbenringes 15. Der erste Kolbenring 14 bzw. zweite Kolbenring 15 weist ein erstes Ende 26 und ein zweites Ende 27 auf. Das erste Ende 26 liegt dem zweiten Ende 27 gegenüber. Der Kolbenring weist einen Innendurchmesser r_{Innen} auf. Im ausgebauten Zustand ist der Innenraundurchmesser r_{Innen} geringfügig kleiner als ein Außendurchmesser an einer Stelle der Spindel an der der entsprechende erste Kolbenring 14 bzw. zweite Kolbenring 15 angeordnet ist.

Das erste Ende 26 weist einen ersten Vorsprung 28 mit einer ersten Anlagefläche 29 auf. Das zweite Ende 27 weist einen zweiten Vorsprung 30 mit einer zweiten Anlagefläche 31 auf. Der erste Kolbenring 14 bzw. zweite Kolbenring 15 ist derart ausgebildet, dass die erste Anlagefläche 29 an der zweiten Anlagefläche 31 anliegt. Insbesondere sind die erste Anlagefläche 29 und die zweite Anlagefläche 31 in der axialen Richtung 32 hintereinander angeordnet. Der erste Kolbenring 14 bzw. zweite Kolbenring 15 wird u. a. über Kraftwirkung des Gewinderinges 8 in axialer Richtung 32 gedrückt, was dazu führt, dass die erste Anlagefläche 29 gegen die zweite Anlagefläche 31 gedrückt wird. Außerdem erfolgt eine Kraft in Folge des Dampfdrucks. Das bedeutet, dass in der axialen Richtung 32 ein Leckdampf an einer Durchströmung verändert wird. Dadurch wird die Dichtwirkung der Dichtungsanordnung 33 verbessert.

Durch die zweiteilige Buchse 5a, 5b, die eine erste Buchse 5a und einer zweite Buchse 5b umfasst, ist eine leichte Montage und Demontage möglich. Da der erste Kolbenring 14 bzw. zweite Kolbenring 15 einen geringeren Innendurchmesser r_{Innen} aufweist als der Außendurchmesser der Spindel 2 wird der erste Kolbenring 14 bzw. zweite Kolbenring 15 mit einer Vorspannung auf den Durchmesser der Spindel 2 montiert. Die Verwendung von einem ersten Kolbenring 14 und einem zusätzlichen zweiten Kolbenring 15 wird die Betriebssicherheit erhöht. Mit Hilfe der Ausgleichsbohrung 4, 25 reduziert sich der für die Auslegung der Ventilantriebe relevante Dichtungsdurchmesser D_{DG} auf den Spindeldurchmesser D_{SP}. Damit können kompaktere Ventilantriebe eingesetzt werden.

## Patentansprüche

1. Dichtungsanordnung (33) zum Abdichten eines Spaltes zwischen einer Spindel (2) und einem um die Spindel (2) angeordneten Ventilgehäuse (3),
wobei die Dichtungsanordnung (33) eine zweiteilige Buchse (5a, 5b) und einen ersten Kolbenring (14) und eine Spindel (2) aufweist,
wobei die zweiteilige Buchse (5a, 5b) zur Ummantelung der Spindel (2) ausgebildet ist,
wobei der erste Kolbenring (14) zur Anordnung zwischen der Spindel (2) und der zweiteiligen Buchse (5a, 5b) ausgebildet ist,
wobei ein zweiter Kolbenring (15) vorgesehen ist, der, in der axialen Richtung (32) gesehen, hinter dem ersten Kolbenring (14) angeordnet ist,
wobei die erste Buchse (5a) und die zweite Buchse (5b) an einer Berührungsfläche (12) aneinander anliegen,
**dadurch gekennzeichnet, dass** die zweiteilige Buchse (5a, 5b) eine Nut (13, 19) aufweist, in der der erste Kolbenring (14) angeordnet ist, wobei in der Nut (13, 19) der zweite Kolbenring (15) angeordnet ist,
wobei zwischen dem ersten Kolbenring (14) und dem zweiten Kolbenring (15) ein Zwischenring (18) angeordnet ist, wobei der Zwischenring in einer weiteren Nut (19) in der ersten Buchse (5a) und zweiten Buchse (5b) angeordnet ist, wobei
in der zweiteiligen Buchse (5a, 5b) eine Ausgleichsbohrung (25) vorgesehen ist,
wobei die Dichtungsanordnung (33) vorgesehen ist zur Abdichtung eines unter dem Außendruck p_{Außen} stehenden Außenraum 11 und eines unter dem Ventildruck pᵥₑₙₜᵢₗ stehenden Ventilraum (10),
wobei die Ausgleichsbohrung (25) derart ausgebildet ist, dass ein zwischen der zweiteiligen Buchse (5a, 5b) und der Spindel (2) gebildeter Spaltraum (22) und der Ventilraum (10) strömungstechnisch miteinander verbunden sind.

2. Dichtungsanordnung (33) nach Anspruch 1,
wobei die Spindel (2) entlang einer axialen Richtung (32) ausgebildet ist und die Dichtungsanordnung (33) einen Gewindering (8) zum Ausüben einer Gewindekraft in der axialen Richtung (32) auf die zweiteilige Buchse (5a, 5b) aufweist, wobei die zweiteilige Buchse (5a, 5b) mittels des Gewinderinges (8) kraftschlüssig mit dem Ventilgehäuse (3) verbunden ist.

3. Dichtungsanordnung (33) nach einem der Ansprüche 1 bis 2,
wobei die zweiteilige Buchse (5a, 5b) derart ausgebildet ist, dass diese mittels der Gewindekraft des Gewinderinges (8) gegen das Ventilgehäuse (3) andrückbar ist.

4. Dichtungsanordnung (33) nach Anspruch 1,
wobei die zweiteilige Buchse (5a, 5b) eine Passfläche (6) zum Anlegen an das Ventilgehäuse (3) in axialer Richtung (32) aufweist.

5. Dichtungsanordnung (33) nach Anspruch 1,
wobei die zweiteilige Buchse (5a, 5b) eine erste Buchse (5a) und einer in der axialen Richtung (32) dahinter angeordnete zweite Buchse (5b) aufweist,
wobei die zweite Buchse (5b) am Ventilraum (10) angrenzt, wobei die Ausgleichsbohrung (25) in der zweiten Buchse (5b) angeordnet ist.

6. Dichtungsanordnung (33) nach einem der vorhergehenden Ansprüche,
wobei der erste (14) und/oder der zweite Kolbenring (15) ein erstes Ende (26) und ein dem ersten Ende (26) gegenüberliegendes zweites Ende (27) aufweist.

7. Dichtungsanordnung (33) nach Anspruch 6,
wobei das erste Ende (26) einen ersten Vorsprung (28) mit einer ersten Anlagefläche (29) aufweist und das zweite Ende (27) einen zweiten Vorsprung (30) mit einer zweiten Anlagefläche (31) aufweist,
wobei die erste Anlagefläche (29) an der zweiten Anlagefläche (31) anliegt.

8. Dichtungsanordnung (33) nach Anspruch 7,
wobei die erste Anlagefläche (29) und die zweite Anlagefläche (31) in der axialen Richtung (32) hintereinander angeordnet sind.

9. Dichtungsanordnung (33) nach einem der Ansprüche 6 bis 8,
wobei der erste Kolbenring (14) und/oder der zweite Kolbenring (15) in ausgebautem Zustand einen Innenringdurchmessers rᵢₙₙₑₙ aufweist,
der geringer ist als ein Außendurchmesser an einer Stelle der Spindel (2), an der der entsprechende erste Kolbenring (14) oder zweite Kolbenring (15) angeordnet ist.

## Claims

1. Sealing arrangement (33) for sealing off a gap between a spindle (2) and a valve housing (3) arranged around the spindle (2), the sealing arrangement (33) having a two-part bush (5a, 5b) and a first piston ring (14) and a spindle (2), the two-part bush (5a, 5b) being designed to encase the spindle (2), the first piston ring (14) being designed to be arranged between the spindle (2) and the two-part bush (5a, 5b), a second piston ring (15) being provided, which, as seen in the axial direction (32), is arranged behind the first piston ring (14), the first bush (5a) and the second bush (5b) bearing one against the other at a contact face (12), **characterized in that** the two-part bush (5a, 5b) has a groove (13, 19) in which the first piston ring (14) is arranged, the second piston ring (15) being arranged in the groove (30, 19), an intermediate ring (18) being arranged between the first piston ring (14) and the second piston ring (15), the intermediate ring being arranged in a further groove (19) in the first bush (5a) and second bush (5b), a compensating bore (25) being provided in the two-part bush (5a, 5b), the sealing arrangement (33) being intended to seal off an outside space (11) which is under the outside pressure p_{outside} and a valve space (10) which is under the valve pressure pᵥₐₗᵥₑ, the compensating bore (25) being designed in such a way that a gap space (22), formed between the two-part bush (5a, 5b) and the spindle (2), and the valve space (10) are connected fluidically to one another.

2. Sealing arrangement (33) according to Claim 1, the spindle (2) being formed along an axial direction (32) and the sealing arrangement (33) having a threaded ring (8) for exerting a thread force in the axial direction (32) upon the two-part bush (5a, 5b), the two-part bush (5a, 5b) being connected non-positively to the valve housing (3) by means of the threaded ring (8).

3. Sealing arrangement (33) according to either one of Claims 1 and 2, the two-part bush (5a, 5b) being designed in such a way that it can be pressed against the valve housing (3) by means of the thread force of the threaded ring (8).

4. Sealing arrangement (33) according to Claim 1, the two-part bush (5a, 5b) having a fitting face (6) for coming to bear against the valve housing (3) in the axial direction (32).

5. Sealing arrangement (33) according to Claim 1, the two-part bush (5a, 5b) having a first bush (5a) and a second bush (5b) arranged behind the latter in the axial direction (32), the second bush (5b) being adjacent to the valve space (10), the compensating bore (25) being arranged in the second bush (5b).

6. Sealing arrangement (33) according to one of the preceding claims, the first (14) and/or the second (15) piston ring having a first end (26) and a second end (27) lying opposite the first end (26).

7. Sealing arrangement (33) according to Claim 6, the first end (26) having a first projection (28) with a first bearing face (29), and the second end (27) having a second projection (30) with a second bearing face (31), the first bearing face (29) bearing against the second bearing face (31).

8. Sealing arrangement (33) according to Claim 7, the first bearing face (29) and the second bearing face (31) being arranged one behind the other in the axial direction (32).

9. Sealing arrangement (33) according to one of Claims 6 to 8, the first piston ring (14) and/or the second piston ring (15) having in the demounted state an inside ring diameter r_{inside} which is smaller than an outside diameter at a point on the spindle (2) at which the corresponding first piston ring (14) or second piston ring (15) is arranged.

## Revendications

1. Dispositif (33) d'étanchéité pour rendre étanche un intervalle entre une broche ( 2 ) et une boîte ( 3 ) à clapet disposée autour de la broche ( 2 ),
dans lequel le dispositif ( 33 ) d'étanchéité comporte un manchon ( 5a, 5b ) en deux parties et un premier segment ( 14 ) de piston et une broche ( 2 ),
dans lequel le manchon ( 5a, 5b ) en deux parties est constitué pour envelopper la broche ( 2 ),
dans lequel le premier segment ( 14 ) de piston est constitué pour être mis entre la broche ( 2 ) et le manchon ( 5a, 5b ) en deux parties,
dans lequel il est prévu un deuxième segment (15) de piston, qui, considéré dans la direction ( 32 ) axiale, est disposé derrière le premier segment ( 14 ) de piston,
dans lequel le premier manchon ( 5a ) et le deuxième manchon ( 5b ) s'appliquent l'un à l'autre sur une surface ( 12 ) de contact,
**caractérisé en ce que** le manchon ( 5a, 5b ) en deux parties a une rainure ( 13, 19 ), dans laquelle le premier segment ( 14 ) de piston est disposé, le deuxième segment ( 15 ) de piston étant disposé dans la rainure ( 13, 19 ),
dans lequel un anneau ( 18 ) intermédiaire est disposé entre le premier segment ( 14 ) de piston et le deuxième segment ( 15 ) de piston,
dans lequel l'anneau intermédiaire est disposé dans une autre rainure ( 19 ) dans le premier manchon (5a) et dans le deuxième manchon ( 5b ),
dans lequel il est prévu un trou ( 25 ) de section dans le manchon ( 5a, 5b ) en deux parties,
dans lequel le dispositif ( 33 ) d'étanchéité est prévu pour rendre étanche un espace ( 11 ) extérieur se trouvant sous la pression P_{Außen} extérieure et un espace ( 10 ) de clapet se trouvant sous la pression Pᵥₑₙₜᵢₗ de clapet,
dans lequel le trou ( 25 ) de compensation est constitué de manière à mettre en communication suivant la technique d'écoulement un espace (22) d'intervalle formé entre le manchon ( 5a, 5b ) en deux parties et la broche ( 2 ) et l'espace ( 10 ) de clapet.

2. Dispositif ( 33 ) d'étanchéité suivant la revendication 1, dans lequel la broche ( 2 ) est constituée le long d'une direction ( 32 ) axiale et le dispositif ( 33 ) d'étanchéité comporte un anneau ( 8 ) fileté pour appliquer une force par filetage dans la direction ( 32 ) axiale au manchon ( 5a, 5b ) en deux parties, le manchon ( 5a, 5b ) en deux parties étant relié à complémentarité de force à la boîte ( 3 ) de clapet au moyen de l'anneau ( 8 ) fileté.

3. Dispositif (33) d'étanchéité suivant l'une des revendications 1 à 2,
dans lequel le manchon ( 5a, 5b ) en deux parties est tel qu'il peut être appliqué à la boîte ( 3 ) de clapet au moyen de la force par filetage de l'anneau ( 8 ) fileté.

4. Dispositif ( 33 ) d'étanchéité suivant la revendication 1, dans lequel le manchon ( 5a, 5b ) en deux parties comporte une surface ( 6 ) d'ajustage pour l'application à la boîte ( 3 ) à clapet dans la direction ( 32 ) axiale.

5. Dispositif ( 33 ) d'étanchéité suivant la revendication 1, dans lequel le manchon ( 5a, 5b ) en deux parties comporte un premier manchon ( 5a ) et un deuxième manchon ( 5b ) disposés derrière dans la direction ( 32 ) axiale,
dans lequel le deuxième manchon ( 5b ) est voisin de l'espace ( 10 ) de clapet, le trou (25) de compensation étant disposé dans le deuxième manchon ( 5b ).

6. Dispositif (33) d'étanchéité suivant l'une des revendications précédentes,
dans lequel le premier (14) et/ou le deuxième segment ( 15 ) de piston a une première extrémité ( 26 ) et une deuxième extrémité (27) opposée à la première extrémité ( 26 ).

7. Dispositif ( 33 ) d'étanchéité suivant la revendication 6, dans lequel la première extrémité (26) a une première saillie ( 28 ) ayant une première surface ( 29 ) de contact et la deuxième extrémité ( 27 ) a une deuxième saillie ( 30 ) ayant une deuxième surface ( 31 ) de contact,
dans lequel la première surface ( 29 ) de contact s'applique à la deuxième surface ( 31 ) de contact.

8. Dispositif ( 33 ) d'étanchéité suivant la revendication 7, dans lequel la première surface ( 29 ) de contact et la deuxième surface (31) de contact sont disposées l'une derrière l'autre dans la direction ( 32 ) axiale.

9. Dispositif (33) d'étanchéité suivant l'une des revendications 6 à 8,
dans lequel le premier segment (14) de piston et/ou le deuxième segment ( 15 ) de piston ont à l'état démonté un diamètre rᵢₙₙₑₙ intérieur,
qui est plus petit qu'un diamètre extérieur en un point de la broche ( 2 ), où le premier segment (14) de piston correspondant ou le deuxième segment ( 15 ) de piston est disposé.
